(19) Europäisches Patentamt / European Patent Office / Office européen des brevets

(11) **EP 2 890 174 B1**

(12) **EUROPEAN PATENT SPECIFICATION**

(45) Date of publication and mention
of the grant of the patent:
**09.09.2020 Bulletin 2020/37**

(51) Int Cl.:
***H04W 16/28*** (2009.01)      ***H04B 7/06*** (2006.01)
***H04W 72/12*** (2009.01)

(21) Application number: **13830959.6**

(22) Date of filing: **22.08.2013**

(86) International application number:
**PCT/CN2013/082119**

(87) International publication number:
**WO 2014/029351 (27.02.2014 Gazette 2014/09)**

(54) **METHOD AND SYSTEM FOR ALLOCATING DOWNLINK SERVICE CHANNEL RESOURCE**

VERFAHREN UND SYSTEM ZUR ZUWEISUNG VON DOWNLINK-DIENSTKANALRESSOURCEN

PROCÉDÉ ET SYSTÈME DESTINÉS À L'AFFECTATION D'UNE RESSOURCE DE CANAL DE
SERVICE DE LIAISON DESCENDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.08.2012 CN 201210300498**

(43) Date of publication of application:
**01.07.2015 Bulletin 2015/27**

(73) Proprietor: **ZTE Corporation
Shenzhen, Guangdong 518057 (CN)**

(72) Inventors:
• **HUA, Yawei
  Shenzhen
  Guangdong 518057 (CN)**
• **YAO, Chunfeng
  Shenzhen
  Guangdong 518057 (CN)**
• **LIU, Qiaoyan
  Shenzhen
  Guangdong 518057 (CN)**

(74) Representative: **Ligi, Stefano et al
GLP S.r.l.
Viale Europa Unita, 171
33100 Udine (IT)**

(56) References cited:
CN-A- 1 984 428        CN-A- 101 448 182
US-A1- 2007 153 760    US-B1- 7 539 496
US-B2- 7 706 323

• "Requirements, Candidate Solutions &
  Technology Roadmap for LTE Rel-12 Onward",
  3GPP DRAFT; RWS-120010 3GPP WS DOCOMO,
  3RD GENERATION PARTNERSHIP PROJECT
  (3GPP), MOBILE COMPETENCE CENTRE ; 650,
  ROUTE DES LUCIOLES ; F-06921
  SOPHIA-ANTIPOLIS CEDEX ; FRANCE , no.
  Ljubljana, Slovenia; 20120611 - 20120612 1 June
  2012 (2012-06-01), XP050655098, Retrieved from
  the Internet:
  URL:http://www.3gpp.org/ftp/workshop/2012-
  06-11_12_RAN_REL12/Docs/ [retrieved on
  2012-06-01]
• JAEHAK CHUNG ET AL: "Combined
  opportunistic beamforming methodology",
  JOURNAL OF COMMUNICATIONS AND
  NETWORKS, NEW YORK, NY, USA,IEEE, US, vol.
  9, no. 2, 1 June 2007 (2007-06-01), pages 128-135,
  XP011481925, ISSN: 1229-2370, DOI:
  10.1109/JCN.2007.6182831

Description

TECHNICAL FIELD

The disclosure relates to techniques for allocating service channel resources, and in particular to a method and system for allocating downlink service channel resources in a Long Term Evolution (LTE) system.

BACKGROUD

At present, in order to improve capacity of a service channel in an LTE system, Space Division Multiplexing (SDM) is typically performed using weak correlations between spatial channels of multiple User Equipments (UEs), so as to improve capacity of a downlink service channel. However, the effect of the SDM using weak correlations between spatial channels of multiple UEs is completely dependent on degrees of correlation between the spatial channels and antennas at a base station, and when the antennas at the base station are strongly correlated with the spatial channels, probability of the SDM is very low, thus the capacity of the downlink service channel cannot be improved effectively.

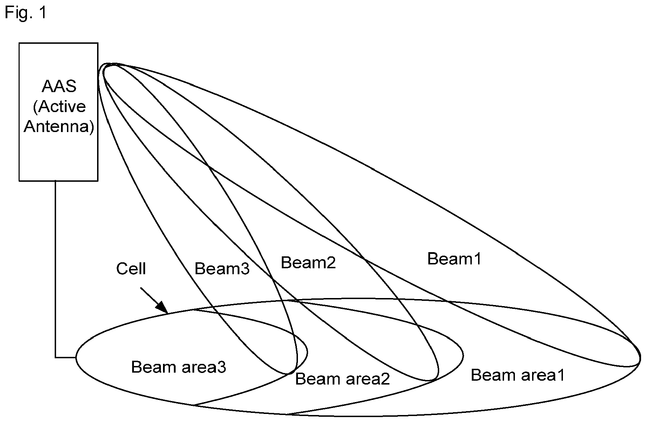

Previously, an Active Antenna System (AAS) integrated on an RRU can form only one beam, the beam covers a Beam Area (BA), i.e., a cell, and different UEs in a same cell have relatively high correlations, thus the probability of the SDM is very low. At present, through technical innovation, the AAS can form multiple beams with each beam covering one beam area, thus one cell can be divided into multiple beam areas, as shown in Fig. 1. In this way, different UEs previously located in one cell can now be located in different beam areas in the cell. Therefore, compared to the case when different UEs are located in the same cell, UEs located in different beam areas have reduced correlations, and in extreme cases, the times of capacity improvement through this new resource allocation solution based on the AAS can be equal to the number of the beam areas.

At present, there are no new-type AAS-based method and system for allocating downlink service channel resources in an LTE system.

US 2007/153760 A1 (2007-07-05) discusses a method, apparatus and system of spatial division multiple access communication in a wireless local area network;

3GPP DRAFT; RWS-120010 3GPP WS DOCOMO, 3RD GENERATION PARTNERSHIP PROJECT (3GPP), MOBILE COMPETENCE CENTRE; 650, ROUTE DES LUCIOLES; discusses Requirements, Candidate Solutions & Technology Roadmap for LTE Rel-12 Onward; and

JOURNAL OF COMMUNICATIONS AND NETWORKS, NEW YORK, NY, USA.IEEE, US, vol. 9, no. 2, (2007-06-01), pages 128-135; JAEHAK CHUNG ETAL : discuss Combined opportunistic beamforming methodology.

SUMMARY

In view of the above, the embodiments of the disclosure provide a method and system for allocating downlink service channel resources in a Long Term Evolution (LTE) system, which can improve probability of Space Division Multiplexing and thus increasing capacity of a relevant service channel.

The features of the method and system according to the disclosure are defined in the independent claims, and the preferable features according to the disclosure are defined in the dependent claims.

It can be learned from above that the embodiments of the disclosure employ the technical solution below: N times of service channel resources after division of a cell into N beam areas are generated according to the number N of beams of an AAS and service channel resources before the division of the cell; a queue of UEs to be scheduled in the cell are acquired, and respective receiving power of respective UEs in the queue in respective beam areas is acquired in sequence; the activated beam areas of respective UEs are determined according to the acquired respective receiving power, wherein the activated beam area is a beam area where relevant service channel resources are allocated to each of the UEs; and the N times of service channel resources are allocated based on the activated beam areas of respective UEs so as to implement SDM. In this way, in the technical solutions for allocating downlink service channel resources in an LTE system, which are provided based on a new type of AAS, SDM is performed based on weak correlations between spatial channels of multiple UEs and weak correlations between different beam areas, specifically, the SDM is implemented by occupation of same RB by UEs within different activated beam areas, then the probability of the SDM can be improved and thus capacity of a relevant service channel is improved, and the times of capacity improvement can be equal to the number of the beam areas in extreme cases.

BRIEF DESCRIPTION OF THE DRAWINGS

Fig. 1 is a schematic diagram of an AAS forming multiple beams;

Fig. 2 is a flow chart of a first embodiment of a method for allocating downlink service channel resources provided by the disclosure;

Fig. 3 is a schematic structural diagram of a system for allocating downlink service channel resources according to a an embodiment of the disclosure;

Fig. 4 is a schematic structural diagram of a first embodiment of an activated beam area determination unit provided by the disclosure;

Fig. 5 is a schematic structural diagram of a second embodiment of an activated beam area determination unit provided by the disclosure; and

Fig. 6 is a flow chart of a second embodiment of a method for allocating downlink service channel resources provided by the disclosure.

## DETAILED DESCRIPTION

The basic idea of the disclosure include that N times of service channel resources after division of a cell into N beam areas are generated according to the number N of beams of an AAS and service channel resources before the division of the cell; a queue of UEs to be scheduled in the cell are acquired, and respective receiving power of respective UEs in the queue in respective beam areas are acquired in sequence; the activated beam areas of respective UEs are determined according to the acquired respective receiving power, wherein the activated beam area is a beam area where relevant service channel resources are allocated to each of the UEs; and the N times of service channel resources are allocated based on the activated beam areas of respective UEs.

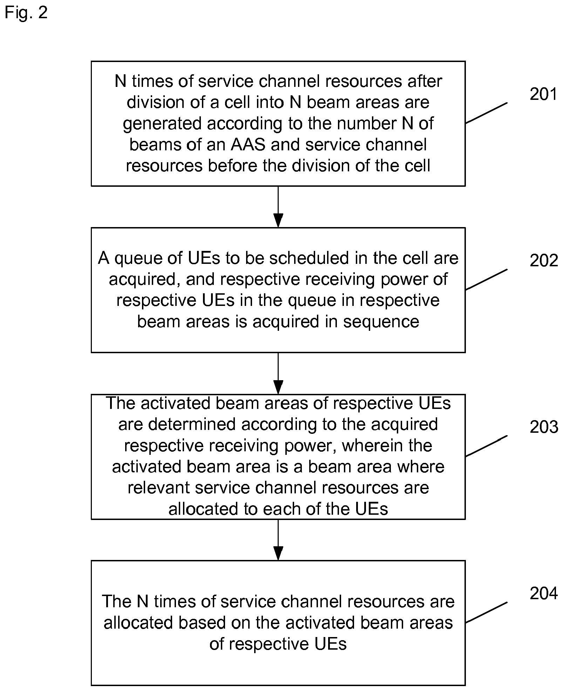

A first embodiment of a method for allocating downlink service channel resources provided by the disclosure is as shown in Fig. 2, and the method includes:

step 201, N times of service channel resources after division of a cell into N beam areas are generated according to service channel resources before the division of the cell and the number N of beams of an AAS;

step 202, a queue of UEs to be scheduled in the cell are acquired, and respective receiving power of respective UEs in the queue in respective beam areas is acquired in sequence;

step 203, the activated beam areas of respective UEs are determined according to the acquired respective receiving power, wherein the activated beam area is a beam area where relevant service channel resources are allocated to each of the UEs; and

step 204, the N times of service channel resources are allocated based on the activated beam areas of respective UEs so as to implement Space Division Multiplexing (SDM) through which different UEs are capable of occupying same time-frequency resources.

Preferably, after the allocation of the service channel resources in step 204, the method may further include:
the allocated service channel resources are indicated as being occupied.

Preferably, the step 204 that the N times of service ice channel resources are allocated based on the activated beam areas of respective UEs may include:
common idle service channel resources within the activated beam areas of respective UEs are determined, and the determined common idle service channel resources are allocated to respective UEs so as to implement SDM through which different UEs are capable of occupying same time-frequency resources.

Preferably, the step 203 that the activated beam areas of respective UEs are determined according to the acquired respective receiving power may include:

the respective receiving power of respective UEs in respective beam areas is converted based on preset reference transmission power to obtain converted values of the respective receiving power;
the converted values of the respective receiving power are smoothed in time domain to obtain smoothed values of the respective receiving power;
respective maximum values are determined among the smoothed values of the respective receiving power of respective UEs in respective beam areas;
respective ratios between the smoothed values of the respective receiving power of respective UEs in respective beam areas and the respective maximum values are calculated; and
it is determined whether respective obtained ratios of respective UEs are greater than a preset activation threshold, and when one of the obtained ratios is greater than or equal to the preset activation threshold, a beam area corresponding to said one of the obtained ratios is determined as an activated beam area of a corresponding UE.

Preferably, the step 203 that the activated beam areas of respective UEs are determined according to the acquired respective receiving power may also include:

the respective receiving power of respective UEs in respective beam areas are converted based on preset reference transmission power to obtain converted values of the respective receiving power;

the converted values of respective receiving power are smoothed in time domain to obtain smoothed values of the respective receiving power;

the smoothed values of respective receiving power of respective UEs in respective beam areas are sequenced in an ascending order, with a smoothed value sequenced in the first place being minimum;

a difference between a sum of the smoothed values of respective receiving power of respective UEs in respective beam areas and the smoothed value sequenced in the first place is calculated, and the calculated difference is divided by the sum of the smoothed values of respective receiving power of respective UEs in respective beam areas to obtain an activation ratio; and

it is determined whether the obtained activation ratio is greater than or equal to the preset activation threshold; when the activation ratio is greater than or equal to the preset activation threshold, the smoothed value sequenced in the first place is deleted; the step for obtaining the activation ratio is repeated until a next obtained activation value is smaller than the preset activation threshold; then beam areas corresponding to a smoothed value sequenced in the first place of the current sequence and remaining smoothed values in the current sequence are determined as the activated beam areas.

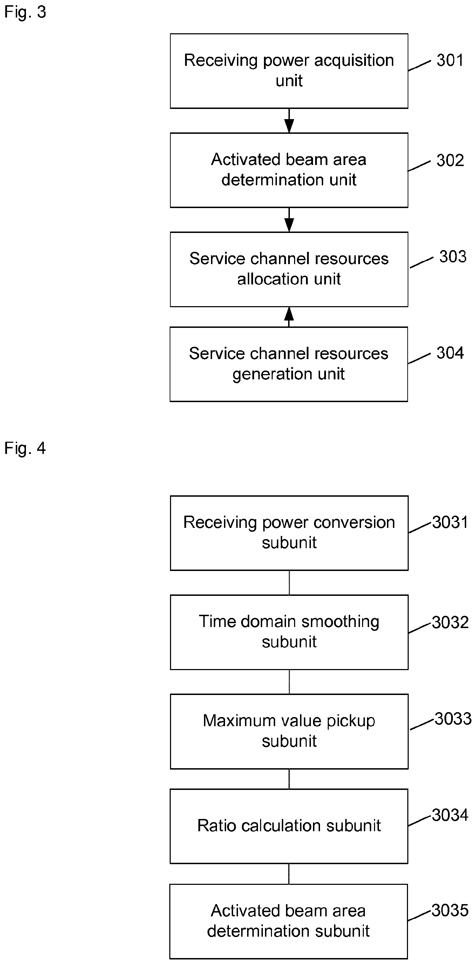

The embodiment of the disclosure provides a system for allocating downlink service channel resources, which may be built in a resource scheduling module of a Building Baseband Unit (BBU), as shown in Fig. 3, the system includes:

a service channel resources generation unit 301 configured to generate, according to service channel resources before division of a cell into N beam areas and the number N of beams of an AAS, N times of service channel resources after the division of the cell;

a receiving power acquisition unit 302 configured to acquire a queue of UEs to be scheduled in the cell, and to acquire respective receiving power of respective UEs in the queue in sequence in respective beam areas;

an activated beam area determination unit 303 configured to determine the activated beam areas of respective UEs according to the acquired respective receiving power, wherein the activated beam area is a beam area where relevant service channel resources are allocated to each of the UEs; and

a service channel resources allocation unit 304 configured to allocate the N times of service channel resources based on the activated beam areas of respective UEs so as to implement SDM and thus improve capacity of a relevant service channel.

The above service channel resources generation unit 301, the receiving power acquisition unit 302, the activated beam area determination unit 303 and the service channel resources allocation unit 304 may be implemented by a Central Processing Unit (CPU), a Digital Signal Processor (DSP) or a Field-Programmable Gate Array (FPGA) in the AAS.

Preferably, the system may further include a service channel resources indication unit 305 configured to indicate the allocated service channel resources as being occupied.

Preferably, the service channel resources allocation unit 304 may be configured to determine common idle service channel resources within the activated beam areas of respective UEs, and to allocate the determined common idle service channel resources to respective UEs so as to implement SDM through which different UEs are capable of occupying same time-frequency resources.

Preferably, as shown in Fig. 4, the activated beam area determination unit 303 may include:

a receiving power conversion subunit 3031 configured to convert the respective receiving power of respective UEs in respective beam areas based on preset reference transmission power to obtain converted values of the respective receiving power;

a time domain smoothing subunit 3032 configured to smooth, in time domain, the converted values of respective receiving power to obtain smoothed values of the respective receiving power;

a maximum value pickup subunit 3033 configured to determine respective maximum values among the smoothed values of the respective receiving power of respective UEs in respective beam areas;

a ratio calculation subunit 3034 configured to calculate respective ratios between the smoothed values of the respective receiving power of respective UEs in respective beam areas and the respective maximum values; and

an activated beam area determination subunit 3035 configured to determine whether respective obtained ratios of respective UEs are greater than a preset activation threshold, and to, when one of the obtained ratios is greater than or equal to the preset activation threshold, determine a beam area corresponding to said one of the obtained ratios as the activated beam area of a corresponding UE.

The above receiving power conversion subunit 3031, the time domain smoothing subunit 3032, the maximum value pickup subunit 3033, the ratio calculation subunit 3034 and the activated beam area determination subunit 3035 may be implemented by a Central Processing Unit (CPU), a Digital Signal Processor (DSP) or a Field Programmable Gate Array (FPGA) in the AAS.

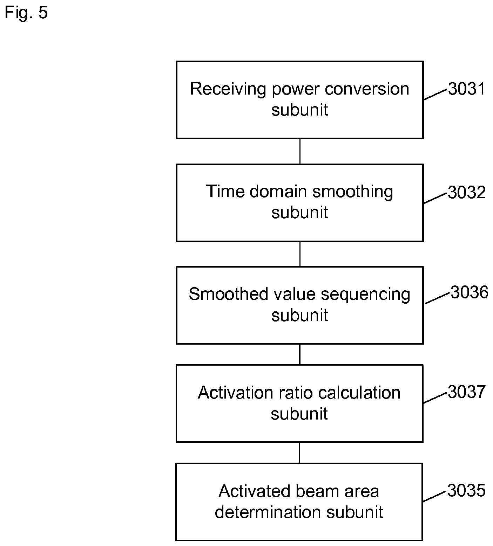

Preferably, as shown in Fig. 5, the activated beam area determination unit 303 may also include:

a receiving power conversion subunit 3031 configured to convert the respective receiving power of respective UEs in respective beam areas based on preset reference transmission power to obtain converted values of the respective receiving power;

a time domain smoothing subunit 3032 configured to smooth, in time domain, the converted values of respective receiving power to obtain smoothed values of the respective receiving power;

a smoothed value sequencing subunit 3036 configured to sequence, in an ascending order, the smoothed values of respective receiving power of respective UEs in respective beam areas with a smoothed value sequenced in the first place being minimum;

an activation ratio calculation subunit 3037 configured to calculate a difference between a sum of the smoothed values of respective receiving power of respective UEs in respective beam areas and the smoothed value sequenced in the first place, and divide the calculated difference by the sum of the smoothed values of respective receiving power of respective UEs in respective beam areas to obtain an activation ratio; and

an activated beam area determination subunit 3035 configured to determine whether the obtained activation ratio is greater than or equal to the preset activation threshold, to delete the smoothed value sequenced in the first place when the activation ratio is greater than or equal to the preset activation threshold, to notify the activation ratio calculation subunit to repeat the step for obtaining the activation ratio until a next obtained activation value is smaller than the preset activation threshold, then to determine the activated beam areas as beam areas corresponding to a smoothed value sequenced in the first place of the current sequence and other remaining smoothed values.

The above receiving power conversion subunit 3031, the time domain smoothing subunit 3032, the smoothed value sequencing subunit 3036, the ratio calculation subunit 3037 and the activated beam area determination subunit 3035 may be implemented by a Central Processing Unit (CPU), a Digital Signal Processor (DSP) or a Field Programmable Gate Array (FPGA) in the AAS.

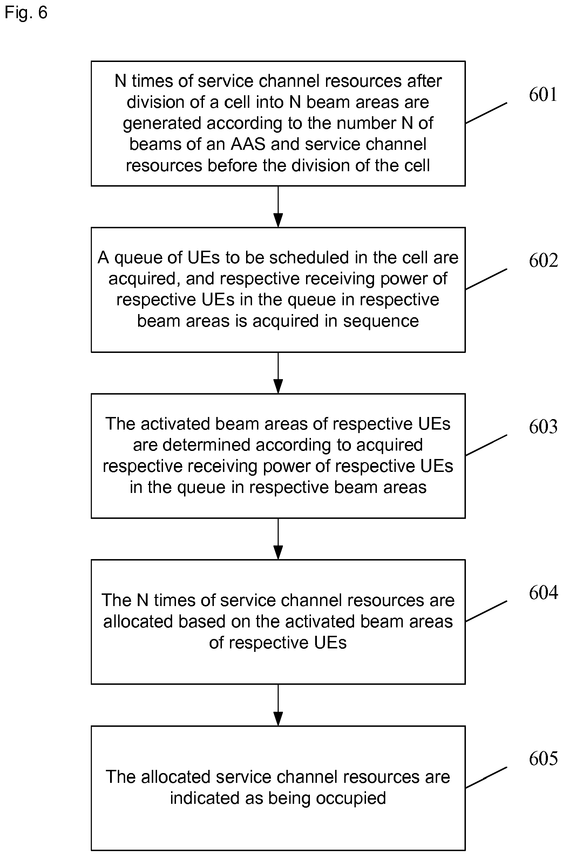

A second embodiment of the method for allocating downlink service channel resources provided by the disclosure is described below, as shown in Fig. 6, the method includes the following steps.

Step 601 is that N times of service channel resources after division of a cell into N beam areas are generated according to the number N of beams of an AAS and service channel resources before the division of the cell;

For example, the AAS has N beams, that is to say, the cell is divided into N beam areas, when before the division, service channel resources of the cell include M Resource Blocks (RBs) that are used for service channel transmission, then N times of service channel resources after the division include N*M RBs. A bit map of the service channel resources consisting of the N*M blocks is as below:

$$\begin{bmatrix} R_{1,1} & R_{1,2} & \cdots & R_{1,M-1} & R_{1,M} \\ R_{2,1} & R_{2,2} & \cdots & R_{2,M-1} & R_{2,M} \\ \vdots & \vdots & \ddots & \vdots & \vdots \\ R_{N-1,1} & R_{N-1,2} & \cdots & R_{N-1,M-1} & R_{N-1,M} \\ R_{N,1} & R_{N,2} & \cdots & R_{N,M-1} & R_{N,M} \end{bmatrix}$$

$R_{1,1}$, ..., $R_{N,M}$ in the bit map of the service channel resources represent RBs.

Step 602 is that a queue of UEs to be scheduled in the cell are acquired, and respective receiving power of respective UEs in the queue is acquired in sequence in respective beam areas;

In practice, the acquired respective receiving power of respective UEs in the queue in respective beam areas can be assembled together $P = \{P_1, P_2, ...,P_N\}$ so as to facilitate subsequent scheduling, wherein N represents the number of beam areas into which the cell is divided, $P_1$ represents the receiving power of a UE in a beam area 1, and $P_N$ represents the receiving power of a UE in a beam area N, and so on.

Step 603 is that activated beam areas of respective UEs are determined according to acquired respective receiving power of respective UEs in the queue in respective beam areas;

the activated beam area is a beam area where relevant service channel resources are allocated to each of the UEs.

Step 604 is that the N times of service channel resources are allocated based on the activated beam areas of respective UEs;

Specifically, when a UE has multiple activated beam areas, the service channel resources are allocated based on common idle service channel resources of the multiple activated beam areas;

The common idle service channel resources are service channel resources that are idle in each of the multiple activated beam areas. The service channel resources include a status flag for indicating whether the status of the service channel resources is idle or occupied, for example, if the status flag is 0, it indicates that the service channel resources are idle, and if the status flag is 1, it indicates that the service channel resources are occupied; when the service channel resources are released, the status flag is indicated as 0; when the service channel resources are occupied, the status flag is indicated as 1; Referring to Fig. 1, for example, when the activated area of a UE includes an activated beam area 1 and an activated beam area 2, bit maps of service channel resources of the beam area 1 and the beam area 2 are acquired; service channel resources, which are idle in both the beam area 1 and the beam area 2, are determined according to status flags of respective service channel resources in the bit maps, and service channel resources are allocated based on the determined service channel resources that are idle in both the beam area 1 and the beam area 2.

Step 605 is that the allocated service channel resources are indicated as being occupied;

For example, a status flag of the allocated service channel resources is indicated as 1.

The step 603 that activated beam areas of respective UEs are determined according to acquired respective receiving power of respective UEs in the queue in respective beam areas may include the following steps.

Step 6031A is that the respective receiving power of respective UEs in respective beam areas are converted based on preset reference transmission power to obtain converted values $P_{target}$ of the respective receiving power;

specifically, the respective receiving power is converted according to an equation (1) to obtain converted values $P_{target}$ of the respective receiving power;

$$P_{target} = PSD_{target} + P_{real} - PSD_{real} \quad (1)$$

in the equation (1), $P_{real}$ represents the receiving power of a UE, $PSD_{real}$ represents the transmission power of the UE at a measured time, and $PSD_{target}$ represents the preset reference transmission power;

in an LTE system, the transmission power of a UE at different time points is different depending on the way of resources allocation, thus in order to better perform smoothing among different time points, conversion is needed.

Step 6032A is that the converted values $P_{target}$ of respective receiving power are smoothed in time domain to obtain smoothed values $\overline{P}_{targe,new}$ of the respective receiving power;

specifically, the converted respective receiving power $P_{target}$ is smoothed in time domain according to an equation (2) to obtain smoothed values $\overline{P}_{targe,new}$ of the respective receiving power;

$$\overline{P}_{targe,new} = (1-\alpha) * \overline{P}_{target,old} + \alpha * P_{target} \quad (2)$$

in the equation (2), $\overline{P}_{targe,old}$ is a previously smoothed value, $\alpha$ represents a smoothing factor, and $\alpha$ is within a range of (0, 1).

Step 6033A is that respective maximum values $max\overline{P}_{targe}$ are determined among the smoothed values of the respective receiving power of respective UEs in respective beam areas.

Step 6034A is that ratios $Pro\_i$ between the smoothed values of the respective receiving power of respective UEs in respective beam areas and the respective maximum values are calculated.

specifically, the ratios $Pro\_i$ between the smoothed values of the respective receiving power of respective UEs in respective beam areas and the respective maximum values $max\overline{P}_{targe}$ are calculated according to:

$$Pro\_i = \frac{\overline{P}_{targei,new}}{max\overline{P}_{targe}} \quad (3).$$

Step 6035A is that it is determined whether respective obtained ratios are greater than a preset activation threshold Thr4BA1; when one of the obtained ratios is greater than or equal to the preset activation threshold Thr4BA1, a beam area corresponding to said one of the obtained ratios is determined as the activated beam area of a corresponding UE; and when one of the obtained ratios is smaller than the preset activation threshold Thr4BA1, a beam area corresponding to said one of the obtained ratios is determined as a non-activated beam area;

here, the activation threshold Thr4BA1 is greater than 0 and smaller than 1, in practice, the value of the activation may be determined according to a link simulation result, preferably, the activation threshold Thr4BA1 is smaller than 0.5.

In this way, it is possible to ensure that UEs in respective activated beam areas can exhibit relatively large receiving power so that beam areas where the receiving power of UEs is relatively small are avoided from being determined as activated beam areas.

In addition, the step 603 that the activated beam areas of respective UEs are determined according to the acquired respective receiving power of respective UEs may also include the following steps.

step 6031B is that the respective receiving power of respective UEs in respective beam areas are converted based on preset reference transmission power to obtain converted values $P_{target}$ of the respective receiving power;

specifically, the respective receiving power is converted according to the equation (1) to obtain converted values $P_{target}$ of the respective receiving power.

Step 6032B is that the converted values of respective receiving power are smoothed in time domain to obtain smoothed values $\overline{P}_{targe,new}$ of the respective receiving power;

specifically, the converted receiving power $P_{target}$ is smoothed in time domain according to the equation (2) to obtain smoothed values $\overline{P}_{targe,new}$ of the receiving power.

Step 6033B is that the smoothed values of respective receiving power of respective UEs in respective beam areas are sequenced in an ascending order, with a smoothed value sequenced in the first place being minimum.

Step 6034B is that a difference between a sum $SumP_{targe}$ of the smoothed values of respective receiving power of respective UEs in respective beam areas and the smoothed value $\bar{P}_{targe1,new}$ sequenced in the first place is calculated according to an equation (4), and the calculated difference is divided by the sum $SumP_{targe}$ of the smoothed values of respective receiving power of respective UEs in respective beam areas to obtain an activation ratio $R\_Pro$ ;

$$ R\_Pro = \frac{Sum\,\bar{P}_{targe} - \bar{P}_{targe1,new}}{Sum\,\bar{P}_{targe}} \quad (4) $$

Step 6035B is that it is determined whether respective obtained ratios are greater than or equal to a preset activation threshold Thr4BA1; when one of the obtained ratios is greater than or equal to the preset activation threshold Thr4BA1, step 6036B is then executed; and when one of the obtained ratios is smaller than the preset activation threshold Thr4BA1, step 6037B is then executed;

here, the activation threshold Thr4BA1 is greater than 0 and smaller than 1; in practice, the value of the activation may be determined according to a link simulation result, preferably, the activation threshold Thr4BA1 is greater than 0.5.

Step 6036B is that a beam area corresponding to said one of the obtained ratios is determined as a non-activated beam area, the smoothed value sequenced in the first place is deleted, then step 6034B is repeated.

Step 6037B is that beam areas corresponding to a smoothed value sequenced in the first place of the current sequence and other remaining smoothed values in the current sequence are determined as the activated beam areas.

In this way, it is possible to ensure that UEs in respective activated beam areas can exhibit relatively large receiving power so that beam areas where receiving power of UEs is relatively small are avoided from being determined as activated beam areas.

In this way, when the activated beam area of a UE is smaller than the whole beam area of a cell, the idle service channel resources of non-activated beam areas can be scheduled for use by other UEs within the non-activated beam areas so that SDM can be implemented, and capacity of the service channel can be improved.

To sum up, the method and system for allocating downlink service channel resources in a Long Term Evolution (LTE) system, which are provided by the embodiments of the disclosure based on a new type of AAS, can improve probability of Space Division Multiplexing and thus increasing capacity of a relevant service channel.

What described are merely embodiments of the disclosure, and are not intended to limit the disclosure.

**Claims**

1. A method for allocating downlink service channel resources, comprising:

   generating (201) N times of service channel resources after division of a cell into N beam areas according to service channel resources before the division of the cell and the number N of beams of an Active Antenna System, AAS, wherein N>1;
   acquiring (202) a queue of User Equipments, UEs, to be scheduled in the cell, and acquiring respective receiving power of respective UEs in the queue in sequence in respective beam areas;
   determining (203) activated beam areas of respective UEs according to the respective receiving power, wherein each of the activated beam areas is a beam area where relevant service channel resources are allocated to each of the respective UEs; and
   allocating (204) the N times of service channel resources based on the activated beam areas of respective UEs so as to implement Space Division Multiplexing, SDM, through which different UEs are capable of occupying same time-frequency resources;
   wherein the determining activated beam areas of respective UEs according to the respective receiving power comprises:

      converting the respective receiving power of respective UEs in respective beam areas based on preset reference transmission power to obtain converted values of the respective receiving power;
      smoothing, in time domain, the converted values of the respective receiving power to obtain smoothed values of the respective receiving power;
      sequencing, in an ascending order, the smoothed values of the respective receiving power of respective UEs in respective beam areas, wherein a smoothed value sequenced in a first place is minimum;
      calculating a difference between a sum of the smoothed values of the respective receiving power of respective UEs in respective beam areas and the smoothed value sequenced in the first place, and dividing the difference by the sum of the smoothed values of the respective receiving power of respective UEs in respective beam areas to obtain an activation ratio; and

determining whether the activation ratio is greater than or equal to a preset activation threshold, deleting the smoothed value sequenced in the first place when the activation ratio is greater than or equal to the preset activation threshold, repeating the steps for obtaining the activation ratio and deleting the smoothed value sequenced in the first place until a next obtained activation value is smaller than the preset activation threshold, then determining beam areas corresponding to a smoothed value sequenced in a first place of current sequence and remaining smoothed values in the current sequence as the activated beam areas of the UE.

2. The method according to claim 1, wherein the allocating the N times of service channel resources based on the activated beam areas of respective UEs comprises:

respectively determining common idle service channel resources within the activated beam areas of respective UEs, and respectively allocating the determined common idle service channel resources to respective UEs so as to implement SDM through which different UEs are capable of occupying same time-frequency resources.

3. A system for allocating downlink service channel resources, comprising:

a service channel resources generation unit (304) configured to generate N times of service channel resources after division of a cell into N beam areas, according to service channel resources before the division of the cell and the number N of beams of an Active Antenna System, AAS, wherein N>1;
a receiving power acquisition unit (301) configured to acquire a queue of User Equipments, UEs, to be scheduled in the cell, and to acquire respective receiving power of respective UEs in the queue in sequence in respective beam areas;
an activated beam area determination unit (302) configured to determine activated beam areas of respective UEs according to the respective receiving power, wherein each of the activated beam areas is a beam area where relevant service channel resources are allocated to each of the respective UEs; and
a service channel resources allocation unit (303) configured to allocate the N times of service channel resources based on the activated beam areas of respective UEs so as to implement Space Division Multiplexing, SDM, through which different UEs are capable of occupying same time-frequency resources;
wherein the activated beam area determination unit comprises:

a receiving power conversion subunit (3031) configured to convert the respective receiving power of respective UEs in respective beam areas based on preset reference transmission power to obtain converted values of the respective receiving power;
a time domain smoothing subunit (3032) configured to smooth, in time domain, the converted values of respective receiving power to obtain smoothed values of the respective receiving power;
a smoothed value sequencing subunit (3036) configured to sequence, in an ascending order, the smoothed values of the respective receiving power of respective UEs in respective beam areas, wherein a smoothed value sequenced in a first place is minimum;
an activation ratio calculation subunit (3037) configured to calculate a difference between a sum of the smoothed values of the respective receiving power of respective UEs in respective beam areas and the smoothed value sequenced in the first place, and divide the difference by the sum of the smoothed values of the respective receiving power of respective UEs in respective beam areas to obtain an activation ratio; and
an activated beam area determination subunit (3035) configured to determine whether the activation ratio is greater than or equal to a preset activation threshold, to delete the smoothed value sequenced in the first place when the activation ratio is greater than or equal to the preset activation threshold, to notify the activation ratio calculation subunit to repeat the steps for obtaining the activation ratio and deleting the smoothed value sequenced in the first place until a next obtained activation value is smaller than the preset activation threshold, then to determine beam areas corresponding to a smoothed value sequenced in a first place of current sequence and remaining smoothed values in the current sequence as the activated beam areas of the UE.

4. The system according to claim 3, wherein the service channel resources allocation unit is configured to determine common idle service channel resources within the activated beam areas of respective UEs, and to allocate the determined common idle service channel resources to respective UEs so as to implement SDM through which different UEs are capable of occupying same time-frequency resources.

**Patentansprüche**

1. Verfahren zur Zuweisung von Downlink-Dienstkanalressourcen, umfassend:

Erzeugen (201) von N Malen von Dienstkanalressourcen nach Teilung einer Zelle in N-Strahlbereiche gemäß Dienstkanalressourcen vor der Teilung der Zelle und der Anzahl N von Strahlen eines aktiven Antennensystems, AAS, worin N>1 ist;
Erfassen (202) einer Warteschlange von Benutzergeräten, UEs, die in der Zelle geplant werden sollen, und Erfassen von jeweiliger Empfangsleistung von jeweiligen UEs in der Warteschlange in Reihenfolge in jeweiligen Strahlbereichen;
Bestimmen (203) von aktivierten Strahlbereichen von jeweiligen UEs gemäß der jeweiligen Empfangsleistung, worin jeder der aktivierten Strahlbereiche ein Strahlbereich ist, in dem passende Dienstkanalressourcen jedem der jeweiligen UEs zugewiesen werden; und
Zuweisen (204) der N Male von Dienstkanalressourcen aufgrund der aktivierten Strahlbereiche von jeweiligen UEs, um Raumteilungsmultiplexen, SDM, zu implementieren, durch welches unterschiedliche UEs dieselben Zeitfrequenzressourcen besetzen können;
worin das Bestimmen von aktivierten Strahlbereichen von jeweiligen UEs gemäß der jeweiligen Empfangsleistung umfasst:

Umwandeln der jeweiligen Empfangsleistung von jeweiligen UEs in jeweiligen Strahlbereichen aufgrund einer vorgegebenen Referenzübertragungsleistung, um umgewandelte Werte der jeweiligen Empfangsleistung zu erhalten;
Glätten, in dem Zeitbereich, der umgewandelten Werte der jeweiligen Empfangsleistung, um geglättete Werte der jeweiligen Empfangsleistung zu erhalten;
Sequenzieren, in einer aufsteigenden Folge, der geglätteten Werte der jeweiligen Empfangsleistung von jeweiligen UEs in jeweiligen Strahlbereichen, worin ein geglätteter Wert, der an einer ersten Stelle sequenziert ist, minimal ist;
Berechnen einer Differenz zwischen einer Summe der geglätteten Werte der jeweiligen Empfangsleistung von jeweiligen UEs in jeweiligen Strahlbereichen und dem geglätteten Wert, der an der ersten Stelle sequenziert ist, und Teilen der Differenz durch die Summe der geglätteten Werte der jeweiligen Empfangsleistung von jeweiligen UEs in jeweiligen Strahlbereichen, um ein Aktivierungsverhältnis zu erhalten; und
Bestimmen, ob das Aktivierungsverhältnis größer als oder gleich wie eine vorgegebene Aktivierungsschwelle ist, Löschen des geglätteten Wertes, der an der ersten Stelle sequenziert ist, wenn das Aktivierungsverhältnis größer als oder gleich wie die vorgegebene Aktivierungsschwelle ist, Wiederholen der Schritte zum Erhalten des Aktivierungsverhältnisses und Löschen des geglätteten Wertes, der an der ersten Stelle sequenziert ist, bis ein nächster erhaltener Aktivierungswert kleiner als die vorgegebene Aktivierungsschwelle ist, dann Bestimmen von Strahlbereichen, die einem geglätteten Wert entsprechen, der an einer ersten Stelle der aktuellen Reihenfolge sequenziert ist, und der verbleibenden geglätteten Werten in der aktuellen Reihenfolge als die aktivierten Strahlbereiche des UE.

2. Verfahren nach Anspruch 1, worin das Zuweisen der N Male von Dienstkanalressourcen aufgrund der aktivierten Strahlbereiche von jeweiligen UEs umfasst: jeweils Bestimmen von gemeinsamen freien Dienstkanalressourcen innerhalb der aktivierten Strahlbereiche von jeweiligen UEs, und jeweils Zuweisen der bestimmten gemeinsamen freien Dienstkanalressourcen jeweiligen UEs, um SDM zu implementieren, durch welches unterschiedliche UEs dieselben Zeitfrequenzressourcen besetzen können.

3. System zur Zuweisung von Downlink-Dienstkanalressourcen, umfassend:

eine Dienstkanalressourcen-Erzeugungseinheit (304), die dafür ausgelegt ist, N Male von Dienstkanalressourcen nach Teilung einer Zelle in N-Strahlbereiche, gemäß Dienstkanalressourcen vor der Teilung der Zelle und der Anzahl N von Strahlen eines aktiven Antennensystems, AAS, zu erzeugen, worin N>1 ist;
eine Empfangsleistungs-Erfassungseinheit (301), die dafür ausgelegt ist, eine Warteschlange von Benutzergeräten, UEs, die in der Zelle geplant werden sollen, zu erfassen und jeweilige Empfangsleistung von jeweiligen UEs in der Warteschlange in Reihenfolge in jeweiligen Strahlbereichen zu erfassen;
eine aktivierte Strahlbereich-Bestimmungseinheit (302), die dafür ausgelegt ist, aktivierte Strahlbereiche von jeweiligen UEs gemäß der jeweiligen Empfangsleistung zu bestimmen, worin jeder der aktivierten Strahlbereiche ein Strahlbereich ist, in dem passende Dienstkanalressourcen jedem der jeweiligen UEs zugewiesen werden; und

eine Dienstkanalressourcen-Zuweisungseinheit (303), die dafür ausgelegt ist, die N Male von Dienstkanalressourcen aufgrund der aktivierten Strahlbereiche von jeweiligen UEs zuzuweisen, um Raumteilungsmultiplexen, SDM, zu implementieren, durch welches unterschiedliche UEs dieselben Zeitfrequenzressourcen besetzen können;

worin die aktivierte Strahlbereich-Bestimmungseinheit umfasst:

eine Empfangsleistungs-Umwandlungsuntereinheit (3031), die dafür ausgelegt ist, die jeweilige Empfangsleistung von jeweiligen UEs in jeweiligen Strahlbereichen aufgrund einer vorgegebenen Referenzübertragungsleistung umzuwandeln, um umgewandelte Werte der jeweiligen Empfangsleistung zu erhalten;

eine Zeitbereich-Glättungsuntereinheit (3032), die dafür ausgelegt ist, in dem Zeitbereich, die umgewandelten Werte der jeweiligen Empfangsleistung zu glätten, um geglättete Werte der jeweiligen Empfangsleistung zu erhalten;

eine geglättete Wertsequenzierungsuntereinheit (3036), die dafür ausgelegt ist, in einer aufsteigenden Folge, die geglätteten Werte der jeweiligen Empfangsleistung von jeweiligen UEs in jeweiligen Strahlbereichen zu sequenzieren, worin ein geglätteter Wert, der an einer ersten Stelle sequenziert ist, minimal ist;

ein Aktivierungsverhältnis-Berechnungsuntereinheit (3037), die dafür ausgelegt ist, eine Differenz zwischen einer Summe der geglätteten Werte der jeweiligen Empfangsleistung von jeweiligen UEs in jeweiligen Strahlbereichen und dem geglätteten Wert, der an der ersten Stelle sequenziert ist, zu berechnen und die Differenz durch die Summe der geglätteten Werte der jeweiligen Empfangsleistung von jeweiligen UEs in jeweiligen Strahlbereichen zu teilen, um ein Aktivierungsverhältnis zu erhalten; und

eine aktivierte Strahlbereich-Bestimmungsuntereinheit (3035), die dafür ausgelegt ist, zu bestimmen, ob das Aktivierungsverhältnis größer als oder gleich wie eine vorgegebene Aktivierungsschwelle ist, den geglätteten Wert zu löschen, der an der ersten Stelle sequenziert ist, wenn das Aktivierungsverhältnis größer als oder gleich wie die vorgegebene Aktivierungsschwelle ist, der Aktivierungsverhältnis-Berechnungsuntereinheit zu benachrichtigen, die Schritte zum Erhalten des Aktivierungsverhältnisses zu wiederholen und den geglätteten Wert zu löschen, der an der ersten Stelle sequenziert ist, bis ein nächster erhaltener Aktivierungswert kleiner als die vorgegebene Aktivierungsschwelle ist, dann Strahlbereiche, die einem geglätteten Wert entsprechen, der an einer ersten Stelle der aktuellen Reihenfolge sequenziert ist, und die verbleibenden geglätteten Werte in der aktuellen Reihenfolge als die aktivierten Strahlbereiche des UE zu bestimmen.

4. System nach Anspruch 3, worin die Dienstkanalressourcen-Zuweisungseinheit dafür ausgelegt ist, gemeinsame freie Dienstkanalressourcen innerhalb der aktivierten Strahlbereiche von jeweiligen UEs zu bestimmen, und die bestimmten gemeinsamen freien Dienstkanalressourcen jeweiligen UEs zuzuweisen, um SDM zu implementieren, durch welches unterschiedliche UEs dieselben Zeitfrequenzressourcen besetzen können.

**Revendications**

1. Procédé pour attribuer des ressources de canal de service de liaison descendante, comprenant :

la génération (201) de N fois des ressources de canal de service après la division d'une cellule en N zones de faisceau selon des ressources de canal de service avant la division de la cellule et le nombre N de faisceaux d'un système d'antenne actif AAS, où N>1 ;

l'acquisition (202) d'une file d'attente d'équipements utilisateurs UE, à programmer dans la cellule, et l'acquisition de la puissance de réception respective d'UE respectifs dans la file d'attente en séquence dans des zones de faisceau respectives ;

la détermination (203) des zones de faisceau activées d'UE respectifs selon la puissance de réception respective, où chacune des zones de faisceau activées est une zone de faisceau où des ressources de canal de service pertinentes sont attribuées à chacun des UE respectifs ; et

l'attribution (204) des N fois de ressources de canal de service sur la base des zones de faisceau activées d'UE respectifs de manière à mettre en œuvre le multiplexage par répartition spatiale SDM, par lequel différents UE sont capables d'occuper des mêmes ressources temps-fréquence ;

où la détermination des zones de faisceau activées d'UE respectifs en fonction de la puissance de réception respective comprend :

la conversion de la puissance de réception respective d'UE respectifs dans des zones de faisceau respectives sur la base d'une puissance de transmission de référence préétablie pour obtenir des valeurs converties de la puissance de réception respective ;

le lissage, dans le domaine temporel, des valeurs converties de la puissance de réception respective pour obtenir des valeurs lissées de la puissance de réception respective ;

le séquençage, dans un ordre croissant, des valeurs lissées de la puissance de réception respective d'UE respectifs dans des zones de faisceau respectives, où une valeur lissée séquencée en premier lieu est minimale ;

le calcul d'une différence entre une somme des valeurs lissées de la puissance de réception respective d'UE respectifs dans des zones de faisceau respectives et la valeur lissée séquencée en premier lieu, et la division de la différence par la somme des valeurs lissées de la puissance de réception respective d'UE respectifs dans des zones de faisceau respectives pour obtenir un rapport d'activation ; et

la détermination du fait que le rapport d'activation est supérieur ou égal à un seuil d'activation préétabli, la suppression de la valeur lissée séquencée en premier lieu lorsque le rapport d'activation est supérieur ou égal au seuil d'activation préétabli, la répétition des étapes pour obtenir le rapport d'activation et la suppression de la valeur lissée séquencée en premier lieu jusqu'à ce qu'une valeur d'activation obtenue suivante soit inférieure au seuil d'activation préétabli, puis la détermination des zones de faisceau correspondant à une valeur lissée séquencée en premier lieu de la séquence actuelle et des valeurs lissées restantes dans la séquence actuelle en tant que zones de faisceau activées de l'UE.

2. Procédé selon la revendication 1, où l'attribution des N fois de ressources de canal de service sur la base des zones de faisceau activées d'UE respectifs comprend :

la détermination respectivement des ressources de canal de service inactives communes dans les zones de faisceau activées d'UE respectifs, et

l'attribution respectivement des ressources de canal de service inactives communes déterminées aux UE respectifs de manière à mettre en œuvre un SDM par l'intermédiaire duquel différents UE sont capables d'occuper des mêmes ressources temps-fréquence.

3. Système pour attribuer des ressources de canal de service de liaison descendante, comprenant :

une unité de génération de ressources de canal de service (304) configurée pour générer N fois des ressources de canal de service après la division d'une cellule en N zones de faisceau, selon des ressources de canal de service avant la division de la cellule et le nombre N de faisceaux d'un système d'antenne actif AAS, où N>1 ;

une unité d'acquisition de puissance de réception (301) configurée pour acquérir une file d'attente d'équipements utilisateur UE, à programmer dans la cellule, et pour acquérir une puissance de réception respective d'UE respectifs dans la file d'attente en séquence dans des zones de faisceau respectives ;

une unité de détermination de zone de faisceau activée (302) configurée pour déterminer des zones de faisceau activées d'UE respectifs selon la puissance de réception respective, où chacune des zones de faisceau activées est une zone de faisceau où des ressources de canal de service pertinentes sont attribuées à chacun des UE respectifs ; et

une unité d'attribution de ressources de canal de service (303) configurée pour attribuer les N fois de ressources de canal de service sur la base des zones de faisceau activées d'UE respectifs de manière à mettre en œuvre le multiplexage par répartition spatiale SDM, par l'intermédiaire duquel différents UE sont capables d'occuper des mêmes ressources temps-fréquence ;

où l'unité de détermination de zone de faisceau activée comprend :

une sous-unité de conversion de puissance de réception (3031) configurée pour convertir la puissance de réception respective d'UE respectifs dans des zones de faisceau respectives sur la base d'une puissance de transmission de référence préétablie pour obtenir des valeurs converties de la puissance de réception respective ;

une sous-unité de lissage dans le domaine temporel (3032) configurée pour lisser, dans le domaine temporel, les valeurs converties de la puissance de réception respective pour obtenir des valeurs lissées de la puissance de réception respective ;

une sous-unité de séquençage de valeurs lissées (3036) configurée pour séquencer, dans un ordre croissant, les valeurs lissées de la puissance de réception respective d'UE respectifs dans des zones de faisceau respectives, où une valeur lissée séquencée en premier lieu est minimale ;

une sous-unité de calcul de rapport d'activation (3037) configurée pour calculer une différence entre une somme des valeurs lissées de la puissance de réception respective d'UE respectifs dans des zones de faisceau respectives et la valeur lissée séquencée en premier lieu, et diviser la différence par la somme des valeurs lissées de la puissance de réception respective d'UE respectifs dans des zones de faisceau respectives pour obtenir un rapport d'activation ; et

une sous-unité de détermination de zone de faisceau activée (3035) configurée pour déterminer si le rapport d'activation est supérieur ou égal à un seuil d'activation préétabli, pour supprimer la valeur lissée séquencée en premier lieu lorsque le rapport d'activation est supérieur ou égal au seuil d'activation préétabli, pour notifier à la sous-unité de calcul de rapport d'activation de répéter les étapes pour obtenir le rapport d'activation et supprimer la valeur lissée séquencée en premier lieu jusqu'à ce qu'une valeur d'activation obtenue suivante soit inférieure au seuil d'activation préétabli, puis pour déterminer des zones de faisceau correspondant à une valeur lissée séquencée en premier lieu de la séquence actuelle et des valeurs lissées restantes dans la séquence actuelle en tant que zones de faisceau activées de l'UE.

4. Système selon la revendication 3, où l'unité d'attribution de ressources de canal de service est configurée pour déterminer des ressources de canal de service inactives communes à l'intérieur des zones de faisceau activées d'UE respectifs, et pour attribuer les ressources de canal de service inactives communes déterminées aux UE respectifs de manière à mettre en œuvre un SDM par l'intermédiaire duquel différents UE sont capables d'occuper des mêmes ressources temps-fréquence.

Fig. 1

Cell    Beam3    Beam2    Beam1

AAS
(Active
Antenna)

Beam area3    Beam area2    Beam area1

Fig. 2

N times of service channel resources after division of a cell into N beam areas are generated according to the number N of beams of an AAS and service channel resources before the division of the cell ⟋ 201

A queue of UEs to be scheduled in the cell are acquired, and respective receiving power of respective UEs in the queue in respective beam areas is acquired in sequence ⟋ 202

The activated beam areas of respective UEs are determined according to the acquired respective receiving power, wherein the activated beam area is a beam area where relevant service channel resources are allocated to each of the UEs ⟋ 203

The N times of service channel resources are allocated based on the activated beam areas of respective UEs ⟋ 204

Fig. 3

| Receiving power acquisition unit | 301 |

↓

| Activated beam area determination unit | 302 |

↓

| Service channel resources allocation unit | 303 |

↑

| Service channel resources generation unit | 304 |

Fig. 4

| Receiving power conversion subunit | 3031 |

| Time domain smoothing subunit | 3032 |

| Maximum value pickup subunit | 3033 |

| Ratio calculation subunit | 3034 |

| Activated beam area determination subunit | 3035 |

Fig. 5

```
┌─────────────────────────────┐
│  Receiving power conversion │ ⟋3031
│           subunit           │
└─────────────────────────────┘
              │
┌─────────────────────────────┐
│   Time domain smoothing     │ ⟋3032
│           subunit           │
└─────────────────────────────┘
              │
┌─────────────────────────────┐
│  Smoothed value sequencing  │ ⟋3036
│           subunit           │
└─────────────────────────────┘
              │
┌─────────────────────────────┐
│   Activation ratio calculation │ ⟋3037
│           subunit           │
└─────────────────────────────┘
              │
┌─────────────────────────────┐
│      Activated beam area    │ ⟋3035
│    determination subunit    │
└─────────────────────────────┘
```

Fig. 6

N times of service channel resources after division of a cell into N beam areas are generated according to the number N of beams of an AAS and service channel resources before the division of the cell — 601

A queue of UEs to be scheduled in the cell are acquired, and respective receiving power of respective UEs in the queue in respective beam areas is acquired in sequence — 602

The activated beam areas of respective UEs are determined according to acquired respective receiving power of respective UEs in the queue in respective beam areas — 603

The N times of service channel resources are allocated based on the activated beam areas of respective UEs — 604

The allocated service channel resources are indicated as being occupied — 605

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007153760 A1

**Non-patent literature cited in the description**

- JOURNAL OF COMMUNICATIONS AND NETWORKS. IEEE, 01 June 2007, vol. 9, 128-135